# EUROPEAN PATENT APPLICATION

(11) **EP 4 667 785 A1**
(43) Date of publication of application: **24.12.2025**
(21) Application number: 24183869.7
(22) Date of filing: 22.06.2024
(51) Int. Cl.: F16H 59/02, F16D 48/06, F16F 9/46, F16H 61/24

(54) **LINEAR DISPLACEMENT LIMITER AND APPLICATIONS THEREOF**

(71) Applicant: Koenigsegg Automotive AB, 262 74 Ängelholm (SE)
(72) Inventor: von KOENIGSEGG, Christian, 266 54 VEJBYSTRAND (SE); SCHÜÜRMANN, Kai, 252 36 HELSINGBORG (SE); WRETBORN, Johan, 302 92 HALMSTAD (SE)
(74) Representative: Brann AB

(57) **Abstract**

A linear-displacement limiter (10) is proposed that has: a hydraulic cylinder (12), a hydraulic conduit (24), a valve (28), an actuator (26), and a hydraulic fluid. The hydraulic cylinder (12) is a double-action cylinder and has a hydraulic first chamber (14), a hydraulic second chamber (16), and a piston (18) that separates the first chamber (14) and the second chamber (16). The hydraulic cylinder (12) further has a first rod (20) that is connected to the piston (18) via the first chamber (14) and a second rod (22) that is connected to the piston (18) via the second chamber (16). The hydraulic cylinder (12) and the hydraulic conduit (24) is filled with the hydraulic fluid, and the hydraulic conduit (24) is arranged to allow a flow of the hydraulic fluid directly between the first chamber (14) and the second chamber (16). The valve (28) is arranged to regulate a flow of the hydraulic fluid between the first chamber (14) and the second chamber (16), and the actuator (26) is arranged to operate the valve (28).

## Description

### TECHNICAL FIELD

The proposed technology generally relates to displacement limiters, and in particular to linear displacement limiters. The proposed technology further relates to stick-shifter arrangements and clutch-pedal arrangements that include displacement limiters, and to drivetrains or powertrains that include such arrangements.

### BACKGROUND

A manual transmission requires the driver to operate a gear stick and a clutch in order to change gears. In an automatic transmission, forward gears are selected without direct input from a driver. In a vehicle with a manual transmission, a flywheel is typically attached to the crankshaft of the engine. A manually operated clutch sits between the flywheel and the input shaft of the transmission and can control whether the transmission is connected to the engine or not. The clutch is typically controlled via a foot-operated clutch pedal, with a compressed clutch pedal disengaging the transmission and a released clutch pedal engaging the transmission. The gears of the transmission are typically selected by disengaging the transmission via the clutch pedal and manually shifting a gear stick mechanically connected to the transmission.

### SUMMARY

It is an object of the proposed technology to emulate a mechanical transmission with a drivetrain having an automatic transmission. It is further an object to provide a stick-shifter arrangement and clutch-pedal arrangement that allows a drive train having an automatic transmission to emulate a mechanical transmission. It is a further object to allow for a precise and fast control of such arrangements.

According to a first aspect of the proposed technology, a linear-displacement limiter comprises: a hydraulic cylinder, a hydraulic conduit, or hydraulic path, a valve, an actuator, and a hydraulic fluid. The hydraulic cylinder is a double-action cylinder and has a first chamber, or hydraulic first chamber, a second chamber, or hydraulic second chamber, and a piston that separates the first chamber and the second chamber. The hydraulic cylinder further has a first rod that is connected to the piston via the first chamber and a second rod that is connected to the piston via the second chamber. The hydraulic cylinder and the hydraulic conduit is filled with the hydraulic fluid. The hydraulic conduit is arranged to allow a flow of the hydraulic fluid directly between the first chamber and the second chamber. The valve is arranged to regulate, or control, a flow of the hydraulic fluid between the first chamber and the second chamber, and the actuator is arranged to operate, or control the function of, the valve. The proposed linear-displacement limiter allows for a precise and fast control of stick-shifter arrangements and clutch-pedal arrangements, as is further described below.

It is understood that the first rod is accessible from outside the hydraulic cylinder. This allows for the first rod to be used to limit a linear motion of an element connected to the first rod by regulating the valve using the actuator. It is further understood that the second rod may be accessible from outside the hydraulic cylinder. It is further understood that that the first rod and the second rod are connected to the piston on opposite sides of the piston. It is understood that the first rod and the second rod may be elongated. The piston, first rod, and second rod may be a monolithic structure. A monolithic structure is understood to be manufactured from a single piece of material, for example by machining.

It is understood that the piston can change position within the hydraulic cylinder. It is further understood that the hydraulic conduit fluidly couples, or connects, the valve to the first chamber and the second chamber. For example, the hydraulic fluid may be a hydraulic oil. It is specified that the hydraulic conduit is arranged to allow a flow of the hydraulic fluid directly between the first chamber and the second chamber. Worded differently, the hydraulic conduit is a piston-bypass conduit arranged to allow a flow of the hydraulic fluid between the first chamber and the second chamber, or the hydraulic conduit is arranged to allow a flow of the hydraulic fluid between the first chamber and the second chamber that bypasses the piston. Worded differently, the hydraulic cylinder may be arranged to generate a flow of the hydraulic fluid in the hydraulic conduit at a shift in position of the piston, for example relative to the cylinder barrel described below, or at a change in volumes of the first chamber and the second chamber. It is understood that the flow of the hydraulic fluid may in any direction between the first chamber and the second chamber, or from the first chamber towards the second chamber and vice versa.

The limiter may form a closed space containing the hydraulic fluid. More specifically, the hydraulic cylinder and the hydraulic conduit may jointly form a closed space containing the hydraulic fluid. This means that the hydraulic fluid cannot enter or leave the limiter, or the combined hydraulic cylinder and hydraulic conduit, for example via an additional port or valve. Worded differently, the limiter may comprise a fixed volume of the hydraulic fluid, and the fixed volume may be contained by the limiter, or more specifically the hydraulic cylinder and the hydraulic conduit. It is understood that the volume of the closed space may be unchanged, or constant, at a shift in position of the piston, for example relative to the cylinder barrel described below.

It is understood that the valve is operationally connected to the hydraulic conduit. It is specified that the valve is arranged to control a flow of hydraulic fluid directly between the first chamber and the second chamber. It is understood that the valve may be the only active component connected to the hydraulic conduit, which means that there may be no pump or additional valves connected to the hydraulic conduit.

It is understood that the valve can be open or closed, and that hydraulic fluid can pass between the first chamber and the second chamber via the valve when the valve is open and is prevented from passing between the first chamber and the second chamber via the valve when the valve is closed. The actuator may be arranged to transition the valve between open and closed.

The valve may be a two-port valve, or two-way valve. This means that the valve can allow passage in both fluid directions between the first chamber and the second chamber. It also means that it cannot divert the hydraulic fluid in any other fluid direction. In other words, the valve may be a non-directional valve.

The hydraulic cylinder may have a cylinder barrel, or cylinder housing. It is understood that the piston is located within the cylinder barrel. It is further understood that the piston, and in extension the first rod and the second rod, can shift in position relative to the cylinder barrel.

The hydraulic cylinder, or cylinder barrel, may form a cylinder bore. It is understood that the piston may be located in the cylinder bore. It is further understood that the cylinder bore has a bore axis, and that the piston can shift in position along the bore axis. It is understood that the shift in position is relative to the cylinder barrel. The cylinder bore may have a cross-sectional cylinder area perpendicular to the bore axis. The cylinder bore may further have an average cross-sectional cylinder area along the cylinder bore, or the bore axis. The cylinder bore may outline a circular-cylindrical geometry.

According to a second aspect of the proposed technology, a stick-shifter arrangement, for example for controlling an automatic transmission, comprises: a gear stick, or gear lever, a frame, or support structure, a mechanical linkage, and a limiter. The gear stick is pivotally connected to, or pivotally supported by, the frame, and arranged to pivot around a first axis relative to the frame. The mechanical linkage is arranged to translate, or transform, a pivoting of the gear stick around the first axis to a linear displacement relative to the frame, and the limiter is arranged to selectively limit, or to be operated to selectively limit, the linear displacement, or to selectively limit a pivoting of the gear stick around the first axis via the mechanical linkage. It is understood that the mechanical linkage may be arranged to translate, or transform, a linear displacement relative to the frame to a pivoting of the gear stick around the first axis.

The gear stick may further be arranged to pivot around a second axis relative to the frame, wherein the second axis is perpendicular to the first axis. It is understood that the first axis and the second axis may be coplanar. In other words, the gear stick may move, or pivot, with two degrees of freedom. The linear displacement may be perpendicular to the first axis.

It is understood that the mechanical linkage operationally connects the gear stick and the limiter. The limiter may be a linear-displacement limiter according to the first aspect of the proposed technology. The first rod of the hydraulic cylinder may be connected to the mechanical linkage. The first rod, the cylinder bore, or the bore axis may be parallel with the linear displacement, or perpendicular to the first axis. The cylinder barrel, or the body of the limiter described below, may be attached to, or fixed relative to, the frame.

According to a third aspect of the proposed technology, a foot-pedal arrangement, for example for controlling an automatic transmission, comprises: a foot pedal, a frame, or support structure, a mechanical linkage, and a limiter. The foot pedal is pivotally connected to, or pivotally supported by, the frame, and arranged to pivot around a first axis relative to the frame. The mechanical linkage is arranged to translate, or transform, a pivoting of the foot pedal around the first axis to a linear displacement relative to the frame, and the limiter is arranged to selectively limit, or to be operated to selectively limit, the linear displacement, or to limit a pivoting of the foot pedal around the first axis via the mechanical linkage. It is understood that the mechanical linkage may be arranged to translate, or transform, a linear displacement relative to the frame to a pivoting of the foot pedal around the first axis.

In other words, the foot pedal may move, or pivot, with one degrees of freedom. The linear displacement may be parallel with the first axis. It is understood that the mechanical linkage operationally connects the foot pedal and the limiter. The limiter may be a linear-displacement limiter according to the first aspect of the proposed technology. The first rod of the hydraulic cylinder may be connected to the mechanical linkage. The first rod, the cylinder bore, or the bore axis may be parallel with the linear displacement, or parallel with the first axis. The cylinder barrel, or the body of the limiter described below, may be attached to, or fixed relative to, the frame.

The foot pedal may be a clutch pedal. The foot pedal arrangement may have a brake pedal that is pivotally connected to, or pivotally supported by, the frame. The foot pedal arrangement may have a gas pedal that is pivotally connected to, or pivotally supported by, the frame.

According to a fourth aspect of the proposed technology, a drivetrain, or powertrain, for a motor vehicle, such as a road vehicle, comprises: an automatic transmission, or automatic gearbox, a transmission control unit, a stick-shifter arrangement, and a clutch-pedal arrangement. The automatic transmission has a plurality of gears.

The transmission control unit is operationally connected to the automatic transmission and arranged to control the operation, or function, of the automatic transmission. the stick-shifter arrangement and the clutch-pedal arrangement are operationally connected to the transmission control unit. The automatic transmission, transmission control unit, stick-shifter arrangement, and clutch-pedal arrangement are configured to operate the automatic transmission, for example in a manual mode, to emulate a drivetrain, or powertrain, that has a manual transmission and a clutch, for example for changing gears, or shifting between gears.

The plurality of gears may be a plurality of discrete gears. The plurality of gears may be forward gears. A forward gear is understood to be arranged to drive the motor vehicle forward. This means that the automatic transmission cannot be a continuous variable transmission.

A discrete gear is here understood as a discrete gear set, or discrete gear setting, of the automatic transmission. It is understood that the automatic transmission has an input shaft and an output shaft, and that the input shaft receives torque and the output shaft delivers torque when driving the motor vehicle. It is further understood that each gear of the automatic transmission has a gear ratio between the input shaft and the output shaft, and that the gear ratio differs between the gears. It is further understood that that the automatic transmission may have a clutch that can decouple an engine from a drive wheel.

An automatic transmission is understood as a multi-speed transmission, for example for motor vehicles, that can be operated without input from a driver to change forward gear, or switch between forward gears. For example, the automatic transmission may have hydraulic mechanisms or electro-mechanical mechanisms for shifting between gears.

The automatic transmission may be an automated manual transmission, a dual-clutch transmission, or a light speed transmission, such as described in WO2020/161334, WO2023/066870, or WO2023/066871.

A manual transmission is understood as a multi-speed transmission, for example for motor vehicles, that can be manually operated to change forward gear, or switch between gears, via a gear stick, or stick-shifter arrangement, that is mechanically linked to the manual transmission. In the context of the manual transmission, a clutch can be manually operated via a clutch pedal, or clutch-pedal arrangement, to decouple the manual transmission from an engine, for example at a change of gear, or a switching between gears. For example, the manual transmission may be any of a sliding mesh gearbox, constant mesh gearbox, synchromesh gearbox, non-synchronous gearbox.

It is understood that the cylinder barrel may have a first end and an opposite second end. The hydraulic cylinder may have a first head at the first end. It is understood that the first rod may extend through the first head. Similarly, the hydraulic cylinder may have a second head at the second end. It is understood that the second rod may extend through the second head. It is further understood that the first head and the second head are attached, or fixed, to the cylinder barrel.

The piston may have a first piston face that is exposed to the first chamber. It is understood that the first piston face may face the first head. Similarly, the piston may have a second piston face that is exposed to the second chamber. It is understood that the second piston face may face the second head. The first head may have a first head face that is exposed to the first chamber. It is understood that the first head face may face the piston, or the second head. Similarly, the second head may have a second head face that is exposed to the second chamber. It is understood that the second head face may face the piston, or the first head.

The piston may have a first end position. It is understood that the piston is located at, or contacts, the first head, in the first end position. Similarly, the piston may have a second end position. It is understood that the piston is located at, contacts the second head in the second end position. The piston and the first head may be arranged to dampen a transition to the first end position. Similarly, the piston and the second head may be arranged to dampen a transition to the second end position.

The first head, or the first head face, may form a first socket, first hub, first blind bore, or first female structure, and the piston, or first piston face, may form a first spigot, first insert, first plug, or first male structure, the first spigot enters the first socket and the first spigot and the first socket jointly forms a first orifice, or first opening, between them at a transition of the piston to the first end position, the first spigot is arranged to generate a flow of hydraulic fluid through the first orifice, or a flow of hydraulic fluid in the first socket that passes through the first orifice, at the transition to the first end position, and the first orifice is arranged to restrict the flow of hydraulic fluid. It is understood that this is to dampen the transition to the first end position.

The first socket may be annular. The first socket may be centered on the bore axis, or on the first rod. It is understood that the first rod may extend through the first socket. The first socket may outline a circular-cylindrical geometry. The first spigot may be annular. The first spigot may be centered on the bore axis, or on the first rod. It is understood that the first rod may extend from the first spigot. It is further understood that the first spigot may be seamlessly joined to the first rod. The first spigot may contact the first head, or a bottom of the first socket, in the first end position. The first orifice may be annular and centered on the bore axis, or on the first rod.

It is understood that the first socket and the first spigot may outline matching geometries. For example, the first socket may outline a circular-cylindrical geometry centered on the bore axis, and the first spigot may outline a circular-cylindrical geometry centered on the bore axis. It is understood that the circular-cylindrical geometry of the first socket has a greater diameter than the circular-cylindrical geometry of the first spigot. The first socket may have an axial extension along the bore axis, or the first rod, and the first spigot may have an axial extension along the bore axis, or the first rod, that is longer than the axial extension of the first socket. The features described here contributes to dampen a transition of the piston to and from the first end position. If the first spigot contacts the first head, it may reduce the effective area of piston at the first end position, which means that more force is required to leave the first end position.

The second head, or the second head face, may form a second socket, second hub, second blind bore, or second female structure, and the piston, or second piston face, may form a second spigot, second insert, second plug, or second male structure. The second spigot enters the second socket and the second spigot and the second socket jointly forms a second orifice, or second opening, between them at a transition of the piston to the second end position. The second spigot is arranged to generate a flow of hydraulic fluid through the second orifice, or a flow of hydraulic fluid in the second socket that passes through the second orifice, at the transition to the second end position, and the second orifice is arranged to restrict the flow of hydraulic fluid. It is understood that this is to dampen the transition to the second end position.

The second socket may be annular. The second socket may be centered on the bore axis, or on the second rod. It is understood that the second rod may extend through the second socket. The second socket may outline a circular-cylindrical geometry. The second spigot may be annular. The second spigot may be centered on the bore axis, or on the second rod. It is understood that the second rod may extend from the second spigot. It is further understood that the second spigot may be seamlessly joined to the second rod. The second spigot may contact the second head, or a bottom of the second socket, in the second end position. The second orifice may be annular and centered on the bore axis, or on the second rod.

It is understood that the second socket and the second spigot may outline matching geometries. For example, the second socket may outline a circular-cylindrical geometry centered on the bore axis, and the second spigot may outline a circular-cylindrical geometry centered on the bore axis. It is understood that the circular-cylindrical geometry of the second socket has a greater diameter than the circular-cylindrical geometry of the second spigot. The second socket may have an axial extension along the bore axis, or the second rod, and the second spigot may have an axial extension along the bore axis, or the second rod, that is longer than the axial extension of the second socket. The features described here contributes to dampen a transition of the piston to and from the second end position. If the second spigot contacts the second head, it may reduce the effective area of piston at the second end position, which means that more force is required to leave the second end position.

The hydraulic cylinder may have a first rod seal supported by the first head and arranged to prevent the hydraulic fluid from passing between first rod and the first head. Similarly, the hydraulic cylinder may have a second rod seal supported by the second head and arranged to prevent the hydraulic fluid from passing between second rod and the second head.

The hydraulic cylinder may have a first wiper seal supported by the first head and arranged to prevent foreign matter, or contaminants, from reaching the first rod seal. It is understood that the first rod seal is located between the first wiper seal and the piston, or the first chamber. Similarly, the hydraulic cylinder may have a second wiper seal supported by the second head and arranged to prevent foreign matter, or contaminants, from reaching the second rod seal. It is understood that the second rod seal is located between the second wiper seal and the piston, or the second chamber.

It is understood that the first chamber has a first volume, the second chamber has a second volume, and that the first volume and the second volume change at a change in position of the piston, for example relative to the cylinder barrel. It is further understood that the first volume is defined by the cylinder barrel, piston, first rod, and first head, and that the second volume is defined by the cylinder barrel, piston, second rod, and second head. The combined, or the sum of the, first volume and second volume may be constant, or unchanging, at change in the position of the piston, or independent of the position of the piston. In other words, the hydraulic cylinder, or cylinder barrel, may be a constant-volume cylinder.

It is understood that the cylinder bore has a cylinder volume, for example defined by the cylinder barrel, the first head and the second head. The maximum volume of the hydraulic fluid in the first chamber, or the maximum first volume, may be smaller than 25%, or 35%, of the volume of the cylinder bore, or the cylinder volume. Similarly, the maximum volume of the hydraulic fluid in the second chamber, or the maximum second volume, may be smaller than 25%, or 35%, of the volume of the cylinder bore, or the cylinder volume. The maximum volume of the hydraulic fluid in the first chamber and the maximum volume of the hydraulic fluid in the second chamber may be the same, or the maximum first volume and the maximum second volume may be the same. This means that the flow of hydraulic fluid at a change in position of the piston is limited, which allows for a more responsive limiter with less losses.

The hydraulic cylinder, or cylinder barrel, may have a first intake connected to the first chamber. It is understood that the hydraulic fluid can enter or exit the first chamber via the first intake. Similarly, the hydraulic cylinder, or cylinder barrel, may have a second intake connected to the second chamber. It is understood that the hydraulic fluid can enter or exit the second chamber via the second intake. The hydraulic conduit may be connected to the first intake and the second intake. The first intake and the second intake may be located on the same side of the hydraulic cylinder, or of the cylinder barrel.

The hydraulic cylinder, or cylinder barrel, may have a first filler port connected to the first chamber and through which the hydraulic fluid can be introduced into the hydraulic cylinder, or more precisely into the first chamber. It is understood that the first filler port is blocked to prevent the hydraulic from leaving the hydraulic cylinder, or first chamber. For example, the hydraulic cylinder, or cylinder barrel, may have a first stop that blocks the first filler port, or more precisely that is sealed to the hydraulic cylinder, or cylinder barrel, and prevents the hydraulic fluid from escaping the hydraulic cylinder, or first chamber, via the first filler port.

Similarly, the hydraulic cylinder, or cylinder barrel, may have a second filler port connected to the second chamber and through which the hydraulic fluid can be introduced into the hydraulic cylinder, or more precisely into the second chamber. It is understood that the second filler port is blocked to prevent the hydraulic from leaving the hydraulic cylinder, or second chamber. For example, the hydraulic cylinder, or cylinder barrel, may have a second stop that blocks the second filler port, or more precisely that is sealed to the hydraulic cylinder, or cylinder barrel, and prevents the hydraulic fluid from escaping the hydraulic cylinder, or second chamber, via the second filler port.

The first filler port and the second filler port may be located on the same side of the hydraulic cylinder, or of the cylinder barrel. They may be located on the opposite side of the hydraulic cylinder, or of the cylinder barrel, relative to the first intake port and the second intake port. This allows for the complete limiter to be properly filled with the hydraulic fluid.

It is specified that the piston separates the first chamber and the second chamber. It is understood that the hydraulic cylinder may comprise a piston seal attached to, or supported by, the piston and arranged to prevent the hydraulic fluid from passing between the piston and the cylinder barrel.

It is specified that the piston may have a first piston face and a second piston face. Each of the first piston face and the second piston face may have an effective area forming a force along the bore axis when subjected to a pressure by the hydraulic fluid in the chamber it faces. It is understood that the first spigot and the second spigot may contribute to the effective area of the first piston face respective the second piston face. In other words, each of the first piston face and the second piston face has an effective area projected on a plane perpendicular to the bore axis. The effective areas of the first piston face and the second piston face may be the same. The effective area of the first piston face may be smaller than 25%, or 35%, of the average cross-sectional cylinder area along the cylinder bore. Similarly, the effective area of the second piston face may be smaller than 25%, or 35%, of the average cross-sectional cylinder area along the cylinder bore. It is understood that the effective piston areas decrease with increased size of the rods at the piston.

It is specified that the hydraulic cylinder has a first rod and a second rod. In other words, the hydraulic cylinder is a dual-rod cylinder.

It is specified that the cylinder bore may outline a circular-cylindrical geometry. The first rod may outline a circular-cylindrical geometry within the first chamber, or cylinder bore, for example at a maximum volume of the first chamber. Similarly, the second rod may outline a circular-cylindrical geometry within the second chamber, or cylinder bore, for example at a maximum volume of the second chamber. The circular-cylindrical geometries of the first rod and the second rod may have the same diameter. The circular-cylindrical geometry of the first rod may have a diameter that is greater than 50%, or 60%, of the diameter of the circular-cylindrical geometry of the cylinder bore. Similarly, the circular-cylindrical geometry of the second rod may have a diameter that is greater than 50%, or 60%, of the diameter of the circular-cylindrical geometry of the cylinder bore.

It is understood that the hydraulic conduit may be external to hydraulic cylinder. For example, this means that the hydraulic conduit is not formed by, or is located in, the piston.

The limiter, or more specifically the hydraulic conduit, may comprise a first safety valve, or pressure relief valve, arranged to bypass the valve. It is understood that the hydraulic conduit fluidly couples, or connects, the first safety valve to the first chamber and the second chamber.

The first safety valve may be a two-way safety valve. Worded differently, the first safety valve may be arranged to open, or allow the hydraulic fluid to bypass the valve, at, or above, a predetermined first maximum pressure in the first chamber or the second chamber. It is understood that the predetermined first maximum pressure may be a relative pressure between the first chamber and the second chamber.

Alternatively, the first safety valve may be a one-way safety valve. The first safety valve may be arranged to bypass the valve in a fluid direction from the first chamber to the second chamber. Worded differently, the first safety valve may be arranged to open, or allow the hydraulic fluid to bypass the valve, at, or above, a predetermined first maximum pressure in the first chamber. It is understood that the first safety valve may be arranged to be closed, or prevent the hydraulic fluid to bypass the valve, at any overpressure in the second chamber. It is understood that the predetermined first maximum pressure may be relative to the pressure in the second chamber.

The limiter, or more specifically the hydraulic conduit, may comprise a second safety valve, or pressure relief valve, arranged to bypass the valve. It is understood that the hydraulic conduit fluidly couples, or connects, the second safety valve to the first chamber and the second chamber. The second safety valve may be a one-way safety valve. The second safety valve may be arranged to bypass the valve in a fluid direction from the second chamber to the first chamber. Worded differently, the second safety valve may be arranged to open, or allow the hydraulic fluid to bypass the valve, at, or above, a predetermined second maximum pressure in the second chamber. It is understood that the second safety valve may be arranged to be closed, or prevent the hydraulic fluid to bypass the valve, at any overpressure in the first chamber. It is understood that the predetermined second maximum pressure may be relative to the pressure in the first chamber.

It is understood that the actuator may be arranged to selectively open the valve to allow the hydraulic fluid to pass between the first chamber and the second chamber, and in extension to allow the piston, the first rod, and the second rod to shift in position, for example relative to the cylinder barrel described above or the body described below. It is further understood that the actuator may be arranged to selectively close the valve to prevent the hydraulic from passing between the first chamber and the second chamber, and in extension to prevent the piston, the first rod, and the second rod from shifting in position, for example relative to the cylinder barrel described above or the body described below.

The valve may be a linear valve. More specifically, the valve may have a valve member and a valve seat, and the valve transitions between open and closed at a liner displacement of the valve member relative to the valve seat. It is understood that the valve member contacts the valve seat and prevents the hydraulic fluid from passing between the valve member and the valve seat when the valve is closed. It is further understood that the valve member is spaced apart from the valve seat and allows the hydraulic fluid to pass between the valve member and the valve seat when the valve is open.

The actuator may be a linear actuator. The actuator may be an electro-mechanical actuator, such as moving-magnet actuator or a voice-coil actuator. It is understood that the actuator may be operationally connected to the valve member and arranged to transition the valve between open and closed. It is understood that the valve and the actuator may jointly form a solenoid valve.

The valve may be naturally open. Worded differently, the valve may be biased to be open, for example by a spring. The actuator may be a single-acting actuator arranged to transition the valve from open to closed when activated. This has the advantage of the limiter allowing a linear displacement at a loss of function of the actuator. Alternatively, the valve may be naturally closed. Worded differently, the valve may be biased to be closed, for example by a spring. The actuator may be a single-acting actuator arranged to transition the valve from closed to open when activated.

The limiter may further comprise a solid body, or housing, that forms the cylinder barrel, or cylinder bore, and the hydraulic conduit. For example, the hydraulic conduit may be formed from connected straight bores in the body. It is understood that the straight bores are plugged to prevent the hydraulic fluid from leaking from the hydraulic conduit. For example, the body may be of an aluminum alloy or steel.

It is understood that the valve may be attached to the body. The body may form part of the valve. For example, the body may form the valve seat.

In the second aspect of the proposed technology, the stick-shifter arrangement may further comprise: a gate. The gate is attached to, or fixed relative to, the frame and forms a gate opening, the gate opening has a plurality of slots and a gap that interconnects the slots. The gear stick can extend, or extends, through any of the gap and each of the slots, and the gear stick can transition, or transitions, between the slots via the gap at a pivoting around the first axis and/or the second axis. Worded differently, the gear stick extends through the gate opening, the gear stick can be positioned in any of the gap and the slots, and the gear stick can transition between the positions in the gap and the slots at a pivoting around the first axis and/or the second axis.

The gate may prevent the gear stick from pivoting around the second axis with the gear stick extending through, or positioned in, one of the slots. It is understood that the pivoting of the gear stick may be limited by the gate. More specifically, the pivoting of the gear stick around the first axis and/or the second axis may be limited by the gate.

The gate may allow the gear stick to pivot around the first axis towards the gap with the gear stick extending through, or positioned in, one of the slots. The gate may allow the gear stick to pivot around the second axis with the gear stick extending through, or positioned in, the gap. The gate may allow the gear stick to pivot around the first axis towards a slot with the gear stick extending through, or positioned in, the gap and aligned with the slot. The gate may prevent the gear stick to pivot around the first axis towards any of the slots with the gear stick extending through, or positioned in, the gap and misaligned with the slots.

It is specified that the piston of the limiter may have a first end position. The limiter and the mechanical linkage may be arranged to define a first end orientation of the gear stick relative to the first axis with the piston in the first end position. Worded differently, the first end position of the piston of the limiter may restrict, or prevent, a pivoting of the gear stick around the first axis in a first direction, or the first end position of the piston of the limiter may define a first end orientation of the gear stick relative to the first axis via the mechanical linkage. It is specified that the piston and the first head of the limiter may be arranged to dampen a transition to the first end position. This in turn may dampen a transition of the gear stick to the first end orientation. It is further specified that the piston of the limiter may have a second end position. The limiter and the mechanical linkage may be arranged to define a second end orientation of the gear stick relative to the first axis with the piston in the second end position. Worded differently, the second end position of the piston of the limiter may restrict, or prevent, a pivoting of the gear stick around the first axis in a second direction, or the second end position of the piston of the limiter may define a second end orientation of the gear stick relative to the first axis via the mechanical linkage. It is specified that the piston and the second head of the limiter may be arranged to dampen a transition to the second end position. This in turn may dampen a transition of the gear stick to the second end orientation.

The slots may be arranged in a first row. The first row may extend parallel with the first axis. The slots may further be arranged in a second row, and the first row and the second row may be spaced apart by the gap, or arranged with the gap between them. The second row may be parallel with the first row, or with the first axis.

It is specified that the mechanical linkage is arranged to translate, or transform, a pivoting of the gear stick around the first axis to a linear displacement relative to the frame. The mechanical linkage may be, or comprise, a sled, or linear-displacement element. The sled may be slidably connected to, or slidably supported by, the frame. The frame may restrict the sled to only allow a change in position perpendicular to the first axis, or parallel with the second axis. In other words, the frame may restrict the sled to move, or change position, with one degree of freedom.

The gear stick may be arranged to engage and shift the position of the sled relative to the frame at a pivoting of the gear stick around the first axis.

The sled may have a first position and a neutral position relative to the frame. The first position and neutral position may be aligned perpendicular to the first axis, or parallel with the second axis. The gear stick may be arranged to engage and transition the sled between the first position and the neutral position at a pivoting, or transition, of the gear stick between the first row of slots and the gap, or between a position in a slot of the first row and a position in the gap. It is understood that a transition of the sled between the first position and the neutral position corresponds to a linear displacement relative to the frame.

The sled may further have a second position relative to the frame. The first position, neutral position, and second position may be aligned perpendicular to the first axis, or parallel with the second axis. It is understood that the neutral position is between the first position and the second position. In other words, the neutral position may be an intermediate position. The gear stick may further be arranged to engage and transition the sled between the second position and the neutral position at a pivoting, or transition, of the gear stick between the second row of slots and the gap, or between a position in a slot of the second row and a position in the gap. It is understood that a transition of the sled between the second position and the neutral position corresponds to a linear displacement relative to the frame.

It is specified that the piston of the limiter may have a first end position. The piston of the limiter may be at, or in, the first end position at the second position of the sled. Similarly, the piston of the limiter may be at, or in, the second end position at the second position of the sled. It is understood that the sled operationally connects the gear stick and the limiter. As specified above, the limiter may be a linear-displacement limiter according to the first aspect of the proposed technology. The first rod of the hydraulic cylinder may be connected, or attached, to the sled, or more generally to the mechanical linkage. It is understood that the first rod, second rod, and piston may shift in position, for example relative to the cylinder barrel or the body, at a transition of the sled between the first position and the neutral position, or between the first position, the neutral position, and the second position. As specified above, the cylinder barrel, or the body, may be attached to, or fixed relative to, the frame.

The stick-shifter arrangement may comprise a spherical joint that pivotally connects the gear stick to the frame. It is understood that the spherical joint encompasses both a spherical bearing and universal joint. It is understood that the gear stick and the frame may form part of the spherical joint. It is understood that the mechanical linkage, or the sled, may be located between the spherical joint and the gate.

The stick-shifter arrangement, or the mechanical linkage, may comprise a linear cam arrangement. The cam arrangement may be arranged to bias the sled to maintain its position at the first position and the neutral position, or to maintain its position at the first position, the neutral position, and the second position. Worded differently, the sled may have a first intermediate position between the first position and the neutral position, and the cam arrangement may be arranged to bias the sled towards the first position at a position between the first position and the first intermediate position, and to bias the sled towards the neutral position at a position between the neutral position and the first intermediate position. The sled may further have a second intermediate position between the second position and the neutral position, and the cam arrangement may be arranged to bias the sled towards the second position at a position between the second position and the second intermediate position, and to bias the sled towards the neutral position at a position between the neutral position and the second intermediate position.

The gear stick may be arranged to change orientation, or position, relative to the sled at a pivoting around the second axis. Worded differently, the sled may be arranged to allow the gear stick to change orientation, or position, relative to the sled at a pivoting around the second axis. The stick-shifter arrangement may comprise a biasing arrangement, or clamp arrangement, that is arranged to bias the gear stick to a center orientation, or center position, relative to the sled. The biasing arrangement may be supported by, or fixed to, the sled. The gear stick may extend through, or be positioned in, the gap of the gate opening at the center orientation of the gear stick and with the sled in the neutral position.

The biasing arrangement may comprise a first tension spring, a first biasing element, or first dolly, and a second biasing element, or second dolly, wherein the first biasing element and the second biasing element are slidably connected to, or slidably supported by, the sled, and can shift in position relative to the sled parallel with the first axis. The sled may restrict the first biasing element and the second biasing element to only allow a change in position parallel with the first axis. In other words, the sled may restrict the first biasing element and the second biasing element to move, or change position, with one degree of freedom. It is understood that the first tension spring may be a coil spring. The first biasing element and the second biasing element are positioned on opposite sides of the gear stick. The first tension spring is arranged to bias the first biasing element and the second biasing element against, or towards, the gear stick. It is understood that this is to bias the gear stick towards the center orientation, or position, for example at a pivoting away from the center orientation, or position. It is further understood that the first tension spring is attached to, or interconnects, the first biasing element and the second biasing element.

The biasing arrangement may further comprise a second tension spring. It is understood that the second tension spring may be a coil spring. The first tension spring and the second tension spring may be positioned on opposite sides of the gear stick. The second tension spring is arranged to bias the first biasing element and the second biasing element against, or towards, the gear stick. It is understood that this is to bias the gear stick towards the center orientation, or position, for example at a pivoting away from the center orientation, or position. It is further understood that the second tension spring is attached to, or interconnects, the first biasing element and the second biasing element.

More specifically, the first tension spring, or the first tension spring and the second tension spring, may be arranged to bias the first biasing element against the gear stick at a pivoting of the gear stick from the center orientation, or center position, towards the first biasing element. The gear stick may have a clearance to the second biasing element at a pivoting of the gear stick from the center orientation, or center position, towards the first biasing element. Similarly, the first tension spring, or the first tension spring and the second tension spring, may be arranged to bias the second biasing element against the gear stick at a pivoting of the gear stick from the center orientation, or center position, towards the second biasing element. The gear stick may have a clearance to the first biasing element at a pivoting of the gear stick from the center orientation, or center position, towards the second biasing element.

It is understood that the gear stick has an orientation relative to the frame and that the orientations changes at a pivoting of the gear stick relative to the frame. It is specified that the stick shifter arrangement may comprise a gate that forms a gate opening, and that the gear stick may extend through the gate opening and be positioned in any of the gap and the slots of the gate opening.

The stick-shifter arrangement may comprise a sensor arrangement. The sensor arrangement may be arranged to determine the orientation of the gear stick relative to the frame. More specifically, the sensor arrangement may be arranged to determine the position of the gear stick in the gate opening, for example a position in each of the slots and the gap.

It is specified that the biasing arrangement may comprise a first biasing element and a second biasing element that can shift in position relative to the sled parallel to the first axis. The sensor arrangement may comprise a first sensor arranged to determine the position of the first biasing element relative to the frame in a direction parallel with the first axis. Worded differently, the first sensor may be arranged to determine a pivoting of the gear stick relative to the frame around the second axis towards the first biasing element. The first sensor may be a Hall effect sensor, or more specifically a linear Hall effect sensor, for example with sensor components attached to the frame and the first biasing element. The sensor arrangement may comprise a second sensor arranged to determine the position of the second biasing element relative to the frame in a direction parallel with the first axis. Worded differently, the second sensor may be arranged to determine a pivoting of the gear stick relative to the frame around the second axis towards the second biasing element. The first sensor may be a Hall effect sensor, or more specifically a linear Hall effect sensor, for example with sensor components attached to the frame and the second biasing element.

The first sensor and the second sensor may be arranged to jointly determine a pivoting around the second axis, to jointly determine a tilt of the gear stick relative to the frame around the second axis, to jointly determine a position of the gear stick within the first row of slots and within the gap, or to jointly determine a position of the gear stick within the first row of slots, within in the gap, and within the second row of slots.

The sensor arrangement may comprise a third sensor arranged to determine the position of the sled relative to the frame in a direction perpendicular to the first axis, or parallel with the second axis. It is understood that the position may be any of the first position and neutral position, or any of the first position, neutral position sensor, and second position. Worded differently, the third sensor may be arranged to determine a pivoting around the first axis, to determine a tilt of the gear stick relative to the frame around the first axis, to determine if a position of the gear stick is in the first row of lots or the gap, or to determine if a position of the gear stick is in the first row of lots, the gap, or the second row of slot. The third sensor may be a Hall effect sensor, or more specifically a linear Hall effect sensor, for example with sensor components attached to the frame and the sled.

It is understood that the gear stick may have a knob for manually manipulating the gear stick.

In the third aspect of the proposed technology, the foot-pedal arrangement may comprise a sensor arrangement. The sensor arrangement may be arranged to determine the orientation of the foot pedal relative to the frame.

It is specified that the piston of the limiter may have a first end position. The limiter and the mechanical linkage may be arranged to define a first end orientation of the foot pedal relative to the first axis with the piston in the first end position. Worded differently, the first end position of the piston of the limiter may restrict, or prevent, a pivoting of the foot pedal around the first axis in a first direction, or the first end position of the piston of the limiter may define a first end orientation of the foot pedal relative to the first axis via the mechanical linkage. It is specified that the piston and the first head of the limiter may be arranged to dampen a transition to the first end position. This in turn may dampen a transition of the foot pedal to the first end orientation. It is further specified that the piston of the limiter may have a second end position. The limiter and the mechanical linkage may be arranged to define a second end orientation of the foot pedal relative to the first axis with the piston in the second end position. Worded differently, the second end position of the piston of the limiter may restrict, or prevent, a pivoting of the foot pedal around the first axis in a second direction, or the second end position of the piston of the limiter may define a second end orientation of the foot pedal relative to the first axis via the mechanical linkage. It is specified that the piston and the second head of the limiter may be arranged to dampen a transition to the second end position. This in turn may dampen a transition of the foot pedal to the second end orientation.

In the fourth aspect of the proposed technology, the stick-shifter arrangement may comprise: a gear stick, or gear lever, a frame, or support structure, and a limiter. The gear stick is connected to the frame and has a plurality of settings relative to frame, each setting corresponds to a selection of a gear from the plurality of gears, or gear selections. The gear stick can be manually shifted between the settings, the limiter is arranged to be operated to selectively prevent, or inhibit, a shifting to one or more, or any, of the settings. The transmission control unit is operationally connected to the limiter and arranged to operate the limiter. It is understood that the settings may be different positions and/or orientations relative to the frame. Worded differently, each setting may correspond to a unique position and/or orientation relative to the frame. It is further understood that each setting may be a discrete setting. It is understood that each setting corresponds to a selection of a gear from the plurality of gears, or gear selections, and the gear stick can be manually shifted between the settings.

More specifically, the stick-shifter arrangement may be a stick-shifter arrangement according to the second aspect of the proposed technology. The gear stick may then have a plurality of settings relative to frame, wherein each setting is a unique orientation relative to the frame. Each setting corresponds to a selection of a gear from the plurality of gears, or gear selections, and the gear stick can be manually shifted between the settings. The limiter may be arranged to be operated to selectively prevent, or inhibit, a shifting to one or more, or any, of the settings, and the transmission control unit may be operationally connected to the limiter and arranged to operate the limiter.

It is specified that the stick shifter arrangement may comprise a gate that forms a gate opening, and that the gear stick may extend through the gate opening and can be positioned in any of the gap and the slots of the gate opening. Each position in a slot may be, or correspond to, a discrete setting of the gear stick relative to frame. This means that the gear stick is connected to the frame and has a plurality of settings relative to frame. Worded differently, each unique orientation of the gear stick may correspond to a position of the gear stick in one of the plurality of slots of the gate opening formed by the gate.

It is specified that the stick-shifter arrangement according to the second aspect of the proposed technology may comprise a sensor arrangement, and that the sensor arrangement may be arranged to determine the orientation of the gear stick relative to the frame. The sensor arrangement, or more specifically the first sensor, second sensor, and third sensor, may be operationally connected to the transmission control unit and to communicate the orientation of the gear stick to the transmission control unit. The transmission control unit may be arranged to operate the limiter based on the orientation of the gear stick.

The transmission control unit may be arranged to operate the limiter to prevent a shifting to a setting corresponding to an incompatible gear of the plurality of gears when driving the vehicle. For example, the transmission control unit may be operationally connected to actuator and arranged to operate the actuator to transition the valve from open to closed to prevent a shifting to a setting corresponding to an incompatible gear when driving the vehicle. This has the effect of a haptic feedback, or force feedback, to the driver that the incompatible gear cannot be selected when emulating a manual transmission. It may also prevent an incompatible gear from being selected. The first safety valve or the second safety valve described above may allow an incompatible gear to be selected if a force is applied to the gear stick that causes the pressure in the first chamber or the second chamber to exceed the first maximum pressure or the second maximum pressure.

An incompatible gear may correspond to a difference in the rotational speed between of the input shaft and the output shaft that is beyond a design limit, or safe operation limit. The powertrain may comprise a first sensor and a second sensor that are operationally connected to the transmission control unit. The first sensor is arranged to determine an indication of the rotational speed of the input shaft and the second sensor is arranged to determine an indication of the rotational speed of the input shaft. It is understood that the first sensor can communicate the indication of the rotational speed of the input shaft to the transmission control unit, and that the second sensor can communicate the indication of the rotational speed of the output shaft to the transmission control unit. The transmission control unit may then be arranged to determine if a gear of the plurality of gears is incompatible based on the indication of the rotational speed of the input shaft and the indication of the rotational speed of the output shaft.

The powertrain may comprise an engine, such as an internal combustion engine or reciprocating engine, and a drive wheel, wherein the drive wheel is coupled to the engine via the automatic transmission, or via the output shaft and the input shaft of the automatic transmission. An incompatible gear may correspond to an overspeed condition in which the drive wheel forces the engine to turn beyond a design limit, or safe operation limit.

The powertrain may comprise an engine speed sensor that is operationally connected to the transmission control unit and arranged to determine an indication of the engine speed, or rotational speed, of the engine. It is understood that the engine speed sensor can communicate the indication of the engine speed to the transmission control unit. The transmission control unit is arranged to determine if a gear of the plurality of gears is incompatible based on the indication of the engine speed. It is understood that the engine speed sensor may form part of an engine control unit that is arranged to control the operation of the engine. It is further understood that the transmission control unit and the engine control unit can be combined in a single control unit.

The powertrain may comprise a vehicle speed sensor or wheel speed sensor that is operationally connected to the transmission control unit and arranged to determine an indication of the vehicle speed of the vehicle. It is understood that the vehicle speed sensor or wheel speed sensor can communicate the indication of the vehicle speed to the transmission control unit. The transmission control unit may the be arranged to determine if a gear of the plurality of gears is incompatible based on the indication of the vehicle speed. The transmission control unit may be arranged to determine if a gear of the plurality of gears is incompatible based on the combined indications of engine speed and vehicle speed.

It is specified that the automatic transmission may have a plurality of discrete forward gears. It is also specified that the gear stick has a plurality of discrete settings relative to frame, and each setting may correspond to a selection of a forward gear. The number of forward gears may be greater than the number of settings. The transmission control unit may be arranged to assign a forward gear to each of the settings. It is specified above that each gear may have a gear ratio between the input shaft and the output shaft, and that the gear ratio differs between the gears. For example, the transmission control unit may be arranged to not assign having the gear having the highest gear ratio to a setting. Similarly, the transmission control unit may be arranged to not assign the gear having the lowest gear ratio to a setting. It is specified above that the plurality of gears may be forward gears. The transmission control unit may be arranged to selectively assign a forward gear to each of the settings. More specifically, the transmission control unit may be arranged to allow a driver to select between a first combination and a second combination of forward gears that are assign to the settings, for example via a user interface, such as a control panel.

It is specified that the automatic transmission, transmission control unit, stick-shifter arrangement, and clutch-pedal arrangement may be configured to operate the automatic transmission in a manual mode to emulate a drivetrain, or powertrain, that has a manual transmission and a clutch. The transmission control unit may further be arranged to operate the automatic transmission in an automatic mode in which it is operated without input from a driver to change gear, or switch between gears.

It is specified that the stick-shifter arrangement is operationally connected to the transmission control unit. The gear stick of the stick-shifter arrangement may have an additional setting relative to frame of the stick-shifter arrangement, and the transmission control unit may be arranged to operate the automatic transmission in an automatic mode with the gear stick in the additional setting, or the automatic transmission may be arranged to change from manual mode to automatic mode at transition of the gear stick to the additional setting. It is understood that the additional settings may be a specific positions and/or orientations relative to the frame. Worded differently, the stick-shifter arrangement may be arranged to allow a driver to select between manual mode and automatic mode.

The foot-pedal arrangement may comprise: a foot pedal, a frame, or support structure, and a limiter. The foot pedal is connected to the frame and can change, or shift, position and/or orientation relative to the frame. The limiter is arranged to be operated to selectively lock the foot pedal relative to the frame, or to selectively prevent a change in position and/or orientation, and the transmission control unit is operationally connected to the limiter and arranged to operate the limiter. It is understood that the foot pedal may be a clutch pedal.

More specifically, the foot-pedal arrangement may be a foot-pedal arrangement according to the third aspect of the proposed technology. It is specified that the foot pedal is pivotally connected to, or pivotally supported by, the frame, and arranged to pivot around a first axis relative to the frame. More specifically, the foot pedal is pivotally connected to, or pivotally supported by, the frame, and can pivot around a first axis relative to the frame to change, or shift, orientation relative to the frame. It is further specified that the limiter is arranged to be operated to selectively limit the linear displacement, or to limit a pivoting of the foot pedal around the first axis via the mechanical linkage. More specifically, the limiter may be arranged to be operated to selectively lock the foot pedal relative to the frame via the mechanical linkage, or to selectively prevent a change in orientation of the foot pedal relative to the frame via the mechanical linkage. It is understood that the transmission control unit may be operationally connected to the limiter and arranged to operate the limiter. It is further understood that the foot pedal may be a clutch pedal, as specified above.

The foot-pedal arrangement may comprise a sensor arrangement arranged to determine the orientation of the foot pedal relative to the frame, for example as described above. The sensor arrangement may be operationally connected to the transmission control unit. It is understood that the sensor arrangement can communicate the orientation of the foot pedal to the transmission control unit. The transmission control unit may be arranged to operate the limiter based on the orientation of the foot pedal.

The foot pedal may have a first setting and a second setting between which the foot pedal can change, or shift, in position and/or orientation relative to the frame. It is understood that the first setting and second setting are positions and/or orientations relative to the frame. The first setting and the second setting may be end-settings, or terminal settings. The foot pedal may be biased towards the first setting. In the manual mode, the first setting may correspond to an engaged clutch and the second setting may correspond to a disengaged clutch, or the foot pedal may be arranged to be in the first setting when fully released and in the second setting when fully compressed or fully engaged. The limiter may be arranged to be operated to selectively lock the foot pedal in the first setting or the second setting.

The transmission control unit may be arranged to operate the limiter to lock the foot pedal relative to the frame, or to prevent a change in position and/or orientation when operating the automatic transmission in automatic mode. For example, the transmission control unit may be operationally connected to actuator and arranged to operate the actuator to transition the valve from open to closed when operating the automatic transmission in automatic mode. This has the effect of a haptic feedback, or force feedback, to the driver that the automatic transmission is operated in automatic mode. The transmission control unit may be arranged to operate the limiter to lock the foot pedal in the first setting when operating the automatic transmission in automatic mode. This also allows for the foot pedal to be used as a footrest. The transmission control unit may be arranged to operate the limiter to lock the foot pedal in the second setting when operating the automatic transmission in automatic mode. The transmission control unit may be arranged to operate the limiter to lock the foot pedal between the first setting and the second setting, when operating the automatic transmission in automatic mode, for example based on input from the driver.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
**Figs. 1a and 1b** are respectively a perspective view and a cross-sectional view of an embodiment of a linear-displacement limiter.
**Figs. 2a and 2b** are respectively a perspective view and a cross-sectional view of an alternative embodiment of a linear-displacement limiter.
**Fig. 3** is a perspective view of an embodiment of a clutch-pedal arrangement having a linear-displacement limiter as described in relation to Figs. 1a and 1b.
**Figs. 4a to 4c** are respectively a perspective view, a first cross-sectional view, and a second cross-sectional view of an embodiment of stick-shifter arrangement having a linear-displacement limiter as described in relation to Figs. 2a and 2b.
**Fig. 5** is a schematic view of an embodiment of a motor vehicle that has a drivetrain with a clutch-pedal arrangement as described in relation to Fig. 3 and a stick-shifter arrangement as described in relation to Figs. 4a to 4 c.

### DETAILED DESCRIPTION OF THE DRAWINGS

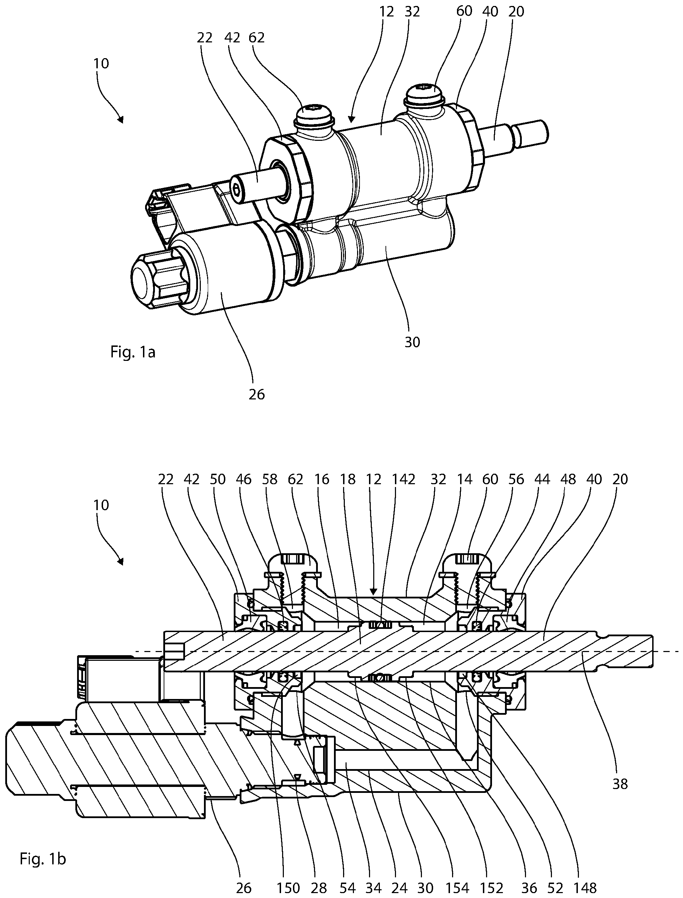

An embodiment of a linear-displacement limiter 10 is shown in **Figs. 1a and 1b****.** The limiter 10 has a hydraulic cylinder 12 that is a double-action cylinder and has a hydraulic first chamber 14, a hydraulic second chamber 16, and a piston 18 that separates the first chamber 14 and the second chamber 16. The cylinder further has a first rod 20 that is connected to the piston 18 via the first chamber 14 and a second rod 22 that is connected to the piston 18 via the second chamber 16. The first rod 20 and the second rod 22 are accessible from outside the hydraulic cylinder 12. The limiter 10 further has a hydraulic conduit 24, a valve 28, and an actuator 26. The hydraulic cylinder 12 and the hydraulic conduit 24 are filled with a hydraulic fluid. The hydraulic conduit 24 fluidly couples the valve 28 to the first chamber 14 and the second chamber 16, and the hydraulic conduit 24 allows a flow of the hydraulic fluid directly between the first chamber 14 and the second chamber 16 via the valve 28. The valve 28 can regulate the flow of the hydraulic fluid between the first chamber 14 and the second chamber 16, and the actuator 26 that can operate the valve 28.

The limiter 10 has a solid body 30 that forms a cylinder barrel 32 of the hydraulic cylinder 12. The solid body 30 also forms the hydraulic conduit 24 from interconnected straight bores that are plugged to prevent the hydraulic fluid from leaking from the hydraulic conduit 24. The valve 28 is attached to the body 30.

The volumes of the first chamber 14 and the second chamber 16 change at a shift in position of the piston 18, which generates a flow of the hydraulic fluid in the hydraulic conduit 24 from the first chamber 14 towards the second chamber 16, or in the opposite direction. The limiter 10 forms a closed space 34 containing a fixed volume of the hydraulic fluid. The first chamber 14 has a first volume and the second chamber 16 has a second volume. The combined first volume and second volume is constant and independent of the position of the piston 18.

The valve 28 is a two-way valve that can be open or closed, and that hydraulic fluid can pass between the first chamber 14 and the second chamber 16 via the valve 28 when the valve 28 is open and is prevented from passing between the first chamber 14 and the second chamber 16 via the valve 28 when the valve 28 is closed. The actuator 26 can transition the valve 28 between open and closed.

The cylinder bore 36 outlines a circular-cylindrical geometry, and the piston 18 is located in the cylinder bore 36. The cylinder bore 36 has a bore axis 38, and the piston 18, first rod 20, and second rod 22 can shift in position along the bore axis 38 relative to the cylinder barrel. The cylinder has a cylinder area that is the average cross-sectional area along and perpendicular to the bore axis 38.

The cylinder barrel 32 has a first end and an opposite second end. The hydraulic cylinder 12 has a first head 40 attached to the cylinder barrel 32 at the first end, and the first rod 20 extends through the first head 40. It further has a second head 42 attached to the cylinder barrel 32 at the second end, and the second rod 22 extends through the second head 42. The hydraulic cylinder 12 has a first rod seal 44 supported by the first head 40 that prevents the hydraulic fluid from passing between first rod 20 and the first head 40. It also has a second rod seal 46 supported by the second head 42 that prevents the hydraulic fluid from passing between second rod 22 and the second head 42. The hydraulic cylinder 12 further has a first wiper seal 48 supported by the first head 40 that prevents foreign matter from reaching the first rod seal 44. It also has a second wiper seal 50 supported by the second head 42 that prevents foreign matter from reaching the second rod seal 46.

The hydraulic cylinder 12 has a piston seal 142 attached to the piston 18 and arranged to prevent the hydraulic fluid from passing between the piston 18 and the cylinder barrel 32. The piston 18 has a first piston face that is exposed to the first chamber 14 and a second piston face that is exposed to the second chamber 16. Each piston face has an effective area that forms a force along the bore axis 38 when subjected to a pressure by the hydraulic fluid. The effective areas of the first piston face and second piston face are the same and about 35 % of the cylinder area.

The abovementioned first volume is defined by the cylinder barrel 32, piston 18, first rod 20, and first head 40, and the second volume is defined by the cylinder barrel 32, piston 18, second rod 22, and second head 42.

The first head 40 has a first head face that is exposed to the first chamber 14 and faces the piston 18, and the second head 42 has a second head face that is exposed to the second chamber 16 and faces the piston 18. The piston 18 has a first end position in which it is located at and contacts the first head 40 and a second end position in which it is located at and contacts the second head 42.

The first head face of the first head 40 forms an annular first socket 148 that is centered on the bore axis 38 and outlines a circular-cylindrical geometry. The first piston face of the piston 18 forms an annular first spigot 152 that is centered on the bore axis 38 and outlines a circular-cylindrical geometry with a smaller diameter than the circular-cylindrical geometry of the first socket 148. The first rod 20 extends from the first spigot 152 of the piston 18. In a transition of the piston 18 to the first end position, the first spigot 152 enters the first socket 148 and forms an annular first orifice centered on the bore axis 38. The first spigot 152 then generates a restricted flow of hydraulic fluid in the first socket 148 that passes through the first orifice, which dampens the transition to the first end position.

Similarly, the second head face of the second head 42 forms an annular second socket 150 that is centered on the bore axis 38 and outlines a circular-cylindrical geometry. The second piston face of the piston 18 forms an annular second spigot 154 that is centered on the bore axis 38 and outlines a circular-cylindrical geometry with a smaller diameter than the circular-cylindrical geometry of the second socket 150. The second rod 22 extends from the second spigot 154 of the piston 18. In a transition to the second end position, the second spigot 154 enters the second socket 150 and forms an annular second orifice centered on the bore axis 38. The second spigot 154 then generates a restricted flow of hydraulic fluid in the second socket 150 that passes through the second orifice, which dampens the transition to the second end position.

The valve 28 is linear valve, the actuator 26 is a linear electro-mechanical actuator, and the valve 28 and the actuator 26 jointly form a solenoid valve. The valve 28 is naturally open and the actuator 26 is arranged to selectively close the valve 28 to prevent the hydraulic from passing between the first chamber 14 and the second chamber 16, and in extension to prevent the piston 18, the first rod 20, and the second rod 22 from shifting in position. In an alternative embodiment, the valve 28 is naturally closed and the actuator 26 can selectively open the valve 28 to allow the hydraulic fluid to pass between the first chamber 14 and the second chamber 16, and in extension to allow the piston 18, the first rod 20, and the second rod 22 to shift in position.

The hydraulic cylinder 12 has a first intake 52 connected to the first chamber 14 through which the hydraulic fluid can enter or exit the first chamber 14. It also has a second intake 54 connected to the second chamber 16 through which the hydraulic fluid can enter or exit the second chamber 16. The first intake 52 and the second intake 54 are located on the same side of the hydraulic cylinder 12, and the hydraulic conduit 24 is connected to the first intake 52 and the second intake 54.

The hydraulic cylinder 12 has a first filler port 56 connected to the first chamber 14 through which the hydraulic fluid can be introduced into the first chamber 14. A first stop 60 in the form of a sealed screw blocks the first filler port 56 and prevents the hydraulic fluid from escaping via the first filler port 56. The hydraulic cylinder 12 also has a second filler port 58 connected to the second chamber 16 through which the hydraulic fluid can be introduced into the second chamber 16. A second stop 62 in the form of a sealed screw blocks the second filler port 58 and prevents the hydraulic fluid from escaping via the second filler port 58. The first filler port 56 and the second filler port 58 are located on the same side of the hydraulic cylinder 12 and on the opposite side of the hydraulic cylinder 12 relative to the first intake 52 port and the second intake 54 port.

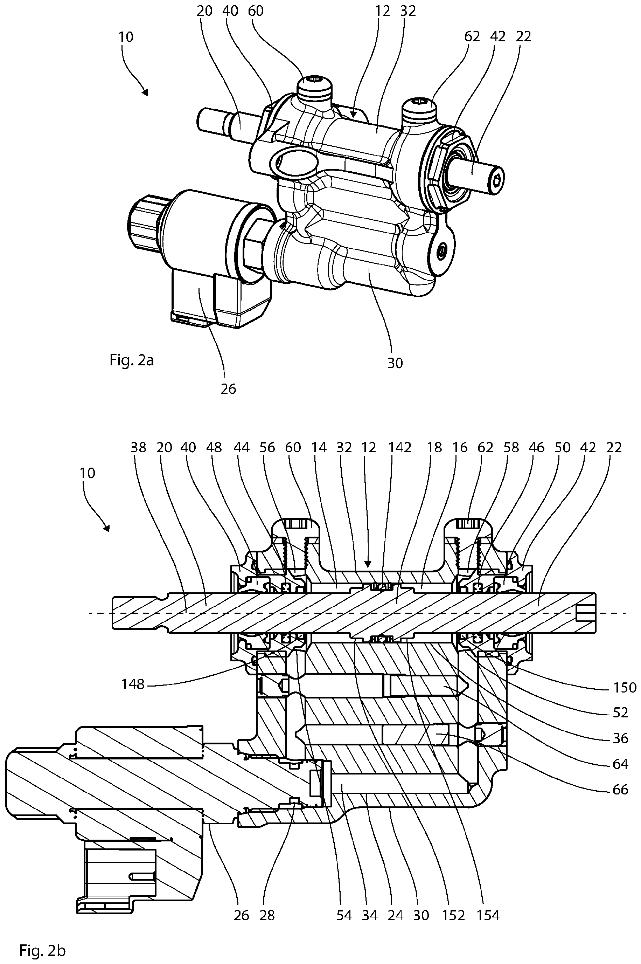

An alternative embodiment of a linear-displacement limiter 10 is shown in **Figs. 2a and 2b****.** The limiter 10 differs from the limiter 10 is shown in **Figs. 1a and 1b** by further having a first safety valve 64 and a second safety valve 66. The hydraulic conduit 24 fluidly couples the first safety valve 64 and the second safety valve 66 to the first chamber 14 and the second chamber 16, and the hydraulic fluid can bypass the valve 28 via the first safety valve 64 and the second safety valve 66. Both the first safety valve 64 and the second safety valve 66 are one-way safety valves. In an alternative embodiment, the limiter 10 has a single two-way safety valve instead of the first safety valve 64 and the second safety valve 66.

The first safety valve 64 allows the hydraulic fluid to bypass the valve 28 in a fluid direction from the first chamber 14 to the second chamber 16 above a predetermined first maximum pressure in the first chamber 14. Similarly, the second safety valve 66 allows the hydraulic fluid to bypass the valve 28 in a fluid direction from the second chamber 16 to the first chamber 14 above a predetermined second maximum pressure in the second chamber 16, with the second maximum pressure being the same as the first maximum pressure.

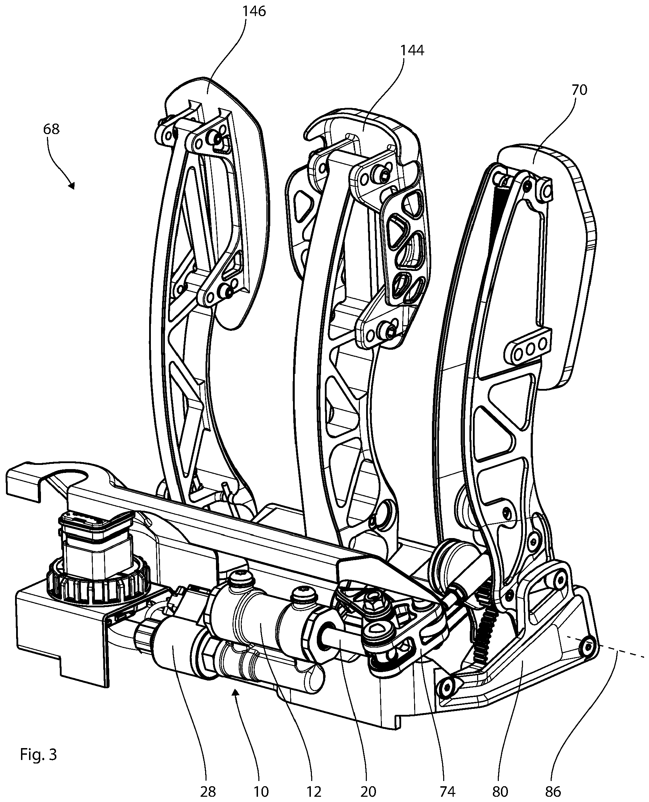

An embodiment of a clutch-pedal arrangement 68 is shown in **Fig. 3****.** The clutch-pedal arrangement 68 has a clutch pedal 70 and a frame 80, and the clutch pedal 70 is pivotally connected to the frame 80 and can pivot around a first axis 86 relative to the frame 80. The clutch-pedal arrangement further has a brake pedal 144 and a gas pedal 146 that are pivotally connected to the frame 80.

The clutch-pedal arrangement 68 further has a mechanical linkage 74 and a limiter 10. The mechanical linkage 74 operationally connects the clutch pedal 70 and the limiter 10 and can translate a pivoting of the clutch pedal 70 around the first axis 86 to a linear displacement relative to the frame 80, and vice vera. The linear displacement is parallel with the first axis 86. The limiter 10 is a linear-displacement limiter 10 as described in relation to **Figs. 1a and 1b****.** The first rod 20 of the hydraulic cylinder 12 is connected to the mechanical linkage 74. The bore axis 38 is parallel with the first axis 86, and the body 30 of the limiter 10 is attached to the frame 80. This way, the limiter 10 can be operated to selectively limit the linear displacement, and in extension the pivoting of the clutch pedal 70 around the first axis 86 via the mechanical linkage 74. The above-described first and second end positions of the piston 18 of the limiter 10 defines dampened first and second end orientations of the clutch pedal 70 relative to the first axis 86 via the mechanical linkage 74.

The clutch-pedal arrangement 68 has a sensor arrangement 114 (not shown) that is arranged to determine the orientation of the clutch pedal 70 relative to the frame 80.

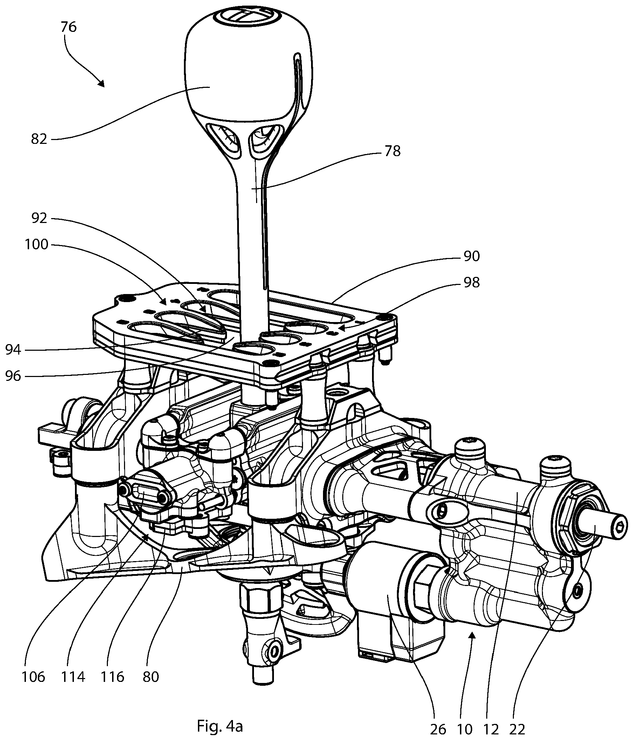

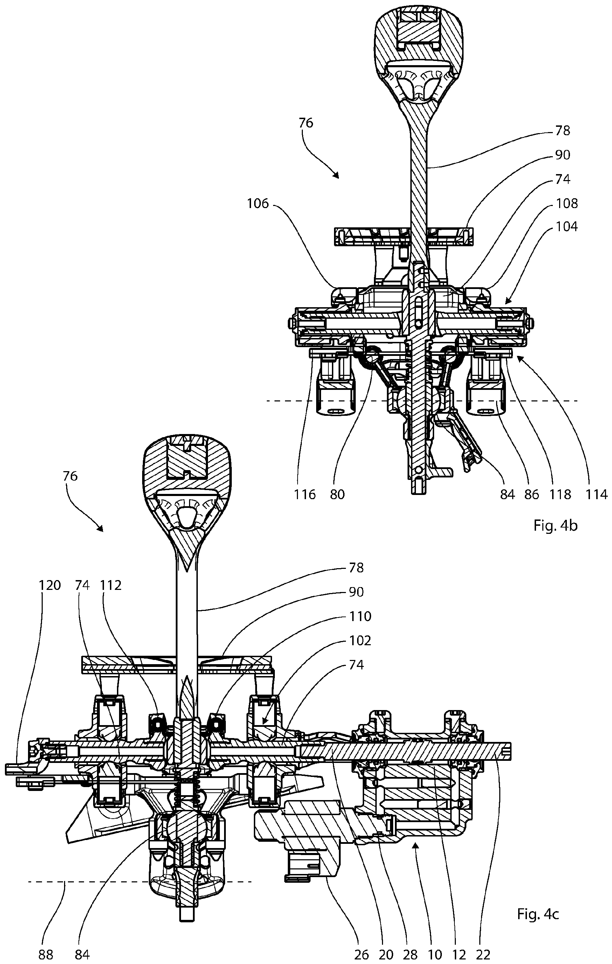

An embodiment of a stick-shifter arrangement 76 is shown in **Figs. 4a to 4c****.** The stick-shifter arrangement 76 has a gear stick 78 and a frame 80. The gear stick 78 has a knob 82 for manually manipulating the gear stick 78. It is pivotally connected to the frame 80 by a spherical joint 84 in the form of a spherical bearing by which it can pivot relative to the frame 80 around a first axis 86 and a second axis 88 that are perpendicular and coplanar.

The stick-shifter arrangement 76 further has a mechanical linkage 74 and a limiter 10. The mechanical linkage 74 operationally connects the gear stick 78 and the limiter 10 and can translate a pivoting of the gear stick 78 around the first axis 86 to a linear displacement perpendicular to the first axis 86 relative to the frame 80, and vice vera. The limiter 10 is a linear-displacement limiter 10 as described in relation to **Figs. 2a and 2b****.** The first rod 20 of the hydraulic cylinder 12 is connected to the mechanical linkage 74. The bore axis 38 is perpendicular to the first axis 86 and the body 30 of the limiter 10 is attached to the frame 80. This way, the limiter 10 is arranged to selectively limit the linear displacement, and in extension to selectively limit a pivoting of the gear stick 78 around the first axis 86 via the mechanical linkage 74. The above-described first and second end positions of the piston 18 of the limiter 10 defines dampened first and second end orientations of the clutch pedal 70 relative to the first axis 86 via the mechanical linkage 74.

The stick-shifter arrangement 76 has a gate 90 that is attached to the frame 80 and forms a gate opening 92. The gate opening 92 has a plurality of slots 94 and a gap 96 that interconnects the slots 94. The slots 94 are arranged in a first row 98 and a second row 100 that extend parallel with the first axis 86 and are be spaced apart by the gap 96.

The gear stick 78 extends through the gate opening 92 and can be positioned in any of the gap 96 and the slots 94 and can transition between slots 94 via the gap 96. The gate 90 prevents the gear stick 78 from pivoting around the second axis 88 with the gear stick 78 extending through any of the slots 94. It allows the gear stick 78 to pivot around the first axis 86 towards the gap 96 with the gear stick 78 extending through any of the slots 94. It further allows the gear stick 78 to pivot around the second axis 88 with the gear stick 78 extending through the gap 96. The gate 90 allows the gear stick 78 to pivot around the first axis 86 towards a slot 94 with the gear stick 78 extending through the gap 96 and aligned with the slot 94, and it prevents the gear stick 78 to pivot around the first axis 86 towards any of the slots 94 with the gear stick 78 extending through the gap 96 and misaligned with the slots 94.

The mechanical linkage 74 is a sled that is slidably supported by the frame 80 and located between the spherical joint 84 and the gate 90. The sled 74 operationally connects the gear stick 78 and the limiter 10, and the frame 80 restricts the sled 74 to only allow a change in position perpendicular to the first axis 86 by a linear displacement relative to the frame 80.

The sled 74 has a first position, a neutral position, and a second position relative to the frame 80. The positions are aligned perpendicular to the first axis 86. In **Figs. 4a to 4c****,** the sled 74 is shown in the neutral position. The gear stick 78 engages and shifts the positions of the sled 74 relative to the frame 80 at a pivoting of the gear stick 78 around the first axis 86. It transitions the sled 74 between the first position and the neutral position at a pivoting of the gear stick 78 between the first row 98 of slots 94 and the gap 96, and between the second position and the neutral position at a pivoting of the gear stick 78 between the second row 100 of slots 94 and the gap 96. The piston 18 of the limiter 10 is in the first end position at the second position of the sled 74, and in the second end position at the second position of the sled 74.

The first rod 20 of the hydraulic cylinder 12 is attached to the sled 74, and the first rod 20, second rod 22, and piston 18 shift in position relative to the body 30 of the cylinder at a transition of the sled 74 between the first position, the neutral position, and the second position.

The stick-shifter arrangement 76 has a linear cam arrangement 102 that can bias the sled 74 to maintain its position at the first position, the neutral position, and second position. The sled 74 has a first intermediate position between the first position and the neutral position, and the cam arrangement 102 biases the sled 74 towards the first position at a position between the first position and the first intermediate position and towards the neutral position at a position between the neutral position and the first intermediate position. Similarly, the sled 74 has a second intermediate position between the second position and the neutral position, and the cam arrangement 102 biases the sled 74 towards the second position at a position between the second position and the second intermediate position and towards the neutral position at a position between the neutral position and the second intermediate position.

The gear stick 78 can change orientation relative to the sled 74 at a pivoting around the second axis 88 if not limited by the gate 90. The stick-shifter arrangement 76 has a biasing arrangement 104 that is supported by the sled 74 and can bias the gear stick 78 to a center orientation relative to the sled 74. The biasing arrangement 104 has a first biasing element 106 and a second biasing element 108. The first biasing element 106 and the second biasing element 108 are slidably supported by the sled 74 and can shift in position relative to the sled 74 with the sled 74 restricting the first biasing element 106 and the second biasing element 108 to only allow a change in position parallel with the first axis 86. The first biasing element 106 and the second biasing element 108 are positioned on opposite sides of the gear stick 78.

The biasing arrangement 104 further has a first tension spring 110 and a second tension spring 112 in the form of coil springs position on opposite sides of the gear stick 78. The first tension spring 110 and a second tension spring 112 are attached to and interconnects the first biasing element 106 and the second biasing element 108 to jointly bias them towards the gear stick 78. This way, the first biasing element 106 or the second biasing element 108 biases the gear stick 78 towards the center orientation at a pivoting away from the center orientation around the second axis 88. The first tension spring 110 and the second tension spring 112 biases the first biasing element 106 against the gear stick 78 at a pivoting of the gear stick 78 from the center orientation towards the first biasing element 106, at which the gear stick 78 has a clearance to the second biasing element 108. Similarly, the first tension spring 110 and the second tension spring 112 biases the second biasing element 108 against the gear stick 78 at a pivoting of the gear stick 78 from the center orientation towards the second biasing element 108, at which the gear stick 78 has a clearance to the first biasing element 106.

The stick-shifter arrangement 76 has a sensor arrangement 114 that is arranged to determine the orientation of the gear stick 78 relative to the frame 80, and in extension the position of the gear stick 78 in the gate opening 92. The sensor arrangement 114 has a first sensor 116, a second sensor 118, and a third sensor 120 in the form of linear Hall effect sensors. The first sensor 116 is connected to the first biasing element 106 and the frame 80 and can determine the position of the first biasing element 106 relative to the frame 80 in a direction parallel with the first axis 86. The second sensor 118 is connected to the second biasing element 108 and the frame 80 and can determine the position of the second biasing element 108 relative to the frame 80 in a direction parallel with the first axis 86. This way, the first sensor 116 and the second sensor 118 can jointly determine a tilt of the gear stick 78 relative to the frame 80 around the second axis 88, and in extension the position of the gear stick 78 within first row 98 of slots 94, the gap 96, and the second row 100 of slots 94.

The third sensor 120 is connected to the sled 74 and the frame 80 and can determine the position of the sled 74 relative to the frame 80 in a direction perpendicular to the first axis 86, such as the abovementioned first position, neutral position sensor, and second position. This way, the third sensor 120 can determine a tilt of the gear stick 78 relative to the frame 80 around the first axis 86 and if the gear stick 78 is positioned in the first row 98 of slots 94, the gap 96, or the second row 100 of slots 94.

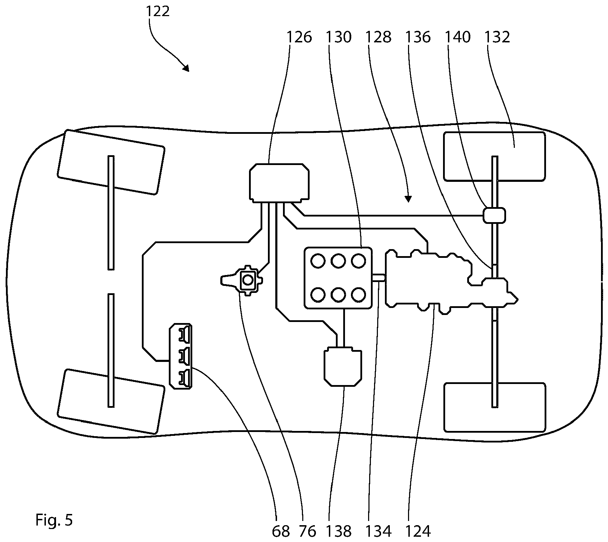

An embodiment of a motor vehicle 122 is shown in **Fig. 5****.** The vehicle 122 has an automatic transmission 124, a transmission control unit 126, a stick-shifter arrangement 76, and a clutch-pedal arrangement 68 that jointly forms a drivetrain 128. The vehicle 122 further has a reciprocating internal combustion engine 130 and a drive wheel 132 that together with the drivetrain 128 forms part of a powertrain 128 for the vehicle 122.

The automatic transmission 124 has an input shaft 134 and an output shaft 136. The drive wheel 132 is coupled to the engine 130 via the output shaft 136 and the input shaft 134 of the automatic transmission 124. The input shaft 134 receives torque from the engine 130 and the automatic transmission 124 converts the torque when driving the vehicle 122. The automatic transmission 124 has a plurality of discrete forward gears, with each gear corresponding to a discrete gear set of the automatic transmission 124. Each gear has a gear ratio between the input shaft 134 and the output shaft 136 with the gear ratio differing between the gears. The automatic transmission 124 is a light speed transmission of the type in WO2020/161334, WO2023/066870, and WO2023/066871. This means that the automatic transmission 124 has clutches (not shown) that can decouple an engine 130 from a drive wheel 132. In alternative embodiments, the automatic transmission 124 is an automated manual transmission or a dual-clutch transmission.

The transmission control unit 126 is operationally connected to the automatic transmission 124 and can control the operation of the automatic transmission 124. The stick-shifter arrangement 76 and the clutch-pedal arrangement 68 are operationally connected to the transmission control unit 126, and the automatic transmission 124, transmission control unit 126, stick-shifter arrangement 76, and clutch-pedal arrangement 68 can operate the automatic transmission 124 in a manual mode to emulate a powertrain 128 that has a manual transmission and a clutch for changing forward gears.

The stick-shifter arrangement 76 is a stick-shifter arrangement 76 as described in relation to **Figs. 4a to 4c****.** The gear stick 78 has a plurality of settings relative to frame 80 between which the gear stick 78 can be manually shifted. Each setting is a unique orientation relative to the frame 80 and corresponds to a selection of a forward gear. The unique orientation corresponds to a position of the gear stick 78 in one of the slots 94 of the gate opening 92 formed by the gate 90.

The sensor arrangement 114 of the stick-shifter arrangement 76 can determine the orientation of the gear stick 78 relative to the frame 80. The first sensor 116, second sensor 118, and third sensor 120 of the sensor arrangement 114 are operationally connected to the transmission control unit 126 and can communicate the orientation of the gear stick 78 to the transmission control unit 126. The limiter 10 can be operated to selectively prevent a shifting to the settings, and the transmission control unit 126 is operationally connected to the limiter 10 and can operate the limiter 10 based on the orientation of the gear stick 78.

The transmission control unit 126 is operationally connected to the actuator 26 of the limiter 10 and can operate the actuator 26 to transition the valve 28 of the limiter 10 from open to closed to prevent a shifting to a setting corresponding to an incompatible gear. If sufficient force is applied to the gear stick 78 to raise the pressure of the hydraulic fluid in the first chamber 14 or the second chamber 16 above the first maximum pressure or the second maximum pressure, the first safety valve 64 or the second safety valve 66 will allow the incompatible gear to be selected. This way the transmission control unit 126 is arranged to operate the limiter 10 to prevent a shifting to setting corresponding to an incompatible gear when driving the vehicle 122, but with a manual override for an incompatible gear.

An incompatible gear corresponds to a difference in the rotational speed between of the input shaft 134 and the output shaft 136 that is beyond a design limit of the automatic transmission 124. The powertrain 128 has a first sensor 116 and a second sensor 118 that are operationally connected to the transmission control unit 126. The first sensor 116 can determine a first indication of the rotational speed of the input shaft 134 and communicate the indication of the rotational speed of the input shaft 134 to the transmission control unit 126. The second sensor 118 can determine a second indication of the rotational speed of the output shaft 136 and communicate the indication of the rotational speed of the output shaft 136 to the transmission control unit 126. The transmission control unit 126 in turn can determine if a gear is incompatible based on the indications received from the first sensor 116 and the second sensor 118.

Another incompatible gear corresponds to an overspeed condition in which the drive wheel 132 forces the engine 130 to turn beyond a design limit. The powertrain 128 has an engine control unit 138 with an engine speed sensor (not shown) that is operationally connected to the transmission control unit 126 and arranged to determine an indication of the engine speed. The engine control unit 138 can communicate the indication of the engine speed to the transmission control unit 126. The powertrain 128 further has a wheel speed sensor 140 that is operationally connected to the transmission control unit 126 and can determine an indication of the vehicle speed of the vehicle 122. The wheel speed sensor 140 can communicate the indication of the vehicle speed to the transmission control unit 126. The transmission control is arranged to determine if a gear is incompatible based on the combined indications of engine speed and vehicle speed.

The automatic transmission 124 has nine discrete forward gears with different gear ratios between the input shaft 134 and the output shaft 136 that decreases with increasing gear number. The gear stick 78 has six discrete settings relative to frame 80 that each corresponds to a selection of a forward gear. In the manual mode, the transmission control has a first combination of setting including the second to sixth and eight forward gears and a second combinations of settings including the first to third, fifth, seventh, and ninth gear, and the transmission control can assign the gears of respective combination to the discrete settings based on a selection made by the driver via a control panel (not shown).

As described above, the automatic transmission 124, transmission control unit 126, stick-shifter arrangement 76, and clutch-pedal arrangement 68 are configured to operate the automatic transmission 124 in a manual mode. The transmission control unit 126 can further operate the automatic transmission 124 in an automatic mode in which it is operated without input from a driver to change gear. The gear stick 78 of the stick-shifter arrangement 76 has an additional setting relative to frame 80, and the transmission control unit 126 operates the automatic transmission 124 in an automatic mode with the gear stick 78 in the additional setting. This way, the stick-shifter arrangement 76 allows a driver to select between manual mode and automatic mode.

The clutch-pedal arrangement 68 is a clutch-pedal arrangement 68 as described in relation to **Fig. 3****.** The clutch pedal 70 is pivotally connected to the frame 80 and can pivot around the first axis 86 to change orientation relative to the frame 80, and the limiter 10 can be operated to selectively lock the clutch pedal 70 relative to the frame 80 via the mechanical linkage 74. The transmission control unit 126 is operationally connected to the actuator 26 of limiter 10 and can operate the limiter 10. The sensor arrangement 114 is operationally connected to the transmission control unit 126 and can communicate the orientation of the clutch pedal 70 to the transmission control unit 126. The transmission control unit 126 in turn can operate the limiter 10 based on the orientation of the clutch pedal 70.

The clutch pedal 70 has a first setting and a second setting between which the clutch pedal 70 can change in orientation relative to the frame 80, and the clutch pedal 70 is biased towards the first setting. In manual mode, the first setting corresponds to an engaged clutch and the second setting corresponds to a disengaged clutch. The transmission control unit 126 operates the limiter 10 to lock the clutch pedal 70 in the first setting when operating the automatic transmission 124 in automatic mode, which allows for the clutch pedal 70 to be used as a raised footrest.

### ITEM LIST

10 limiter
12 hydraulic cylinder
14 first chamber
16 second chamber
18 piston
20 first rod
22 second rod
24 hydraulic conduit
26 actuator
28 valve
30 body
32 cylinder barrel
34 closed space
36 cylinder bore
38 bore axis
40 first head
42 second head
44 first rod seal
46 second rod seal
48 first wiper seal
50 second wiper seal
52 first intake
54 second intake
56 first filler port
58 second filler port
60 first stop
62 second stop
64 first safety valve
66 second safety valve
68 clutch-pedal arrangement
70 clutch pedal
74 mechanical linkage or sled
76 stick-shifter arrangement
78 gear stick
80 frame
82 knob
84 spherical joint
86 first axis
88 second axis
90 gate
92 gate opening
94 slots
96 gap
98 first row
100 second row
102 cam arrangement
104 biasing arrangement
106 first biasing element
108 second biasing element
110 first tension spring
112 second tension spring
114 sensor arrangement
116 first sensor
118 second sensor
120 third sensor
122 motor vehicle
124 automatic transmission
126 transmission control unit
128 drivetrain or powertrain
130 engine
132 drive wheel
134 input shaft
136 output shaft
138 engine control unit
140 wheel speed sensor
142 piston seal
144 brake pedal
146 gas pedal
148 first socket
150 second socket
152 first spigot
154 second spigot

## Claims

1. A linear-displacement limiter (10) that comprises:
- a hydraulic cylinder (12),
- a hydraulic conduit (24),
- a valve (28),
- an actuator (26), and
- a hydraulic fluid, wherein
the hydraulic cylinder (12) is a double-action cylinder and has a hydraulic first chamber (14), a hydraulic second chamber (16), and a piston (18) that separates the first chamber (14) and the second chamber (16), a first rod (20) that is connected to the piston (18) via the first chamber (14) and a second rod (22) that is connected to the piston (18) via the second chamber (16),
the hydraulic cylinder (12) and the hydraulic conduit (24) is filled with the hydraulic fluid, the hydraulic conduit (24) is arranged to allow a flow of the hydraulic fluid directly between the first chamber (14) and the second chamber (16),
the valve (28) is arranged to regulate a flow of the hydraulic fluid between the first chamber (14) and the second chamber (16), and
the actuator (26) is arranged to operate the valve (28).

2. The linear-displacement limiter (10) according to claim 1, wherein the hydraulic cylinder (12) and the hydraulic conduit (24) jointly form a closed space (34) containing the hydraulic fluid.

3. The linear-displacement limiter (10) according to claim 1 or 2, wherein the hydraulic cylinder (12) has a cylinder barrel (32), the piston (18) is located within the cylinder barrel (32) and can shift in position relative to the cylinder barrel (32), the first chamber (14) has a first volume, the second chamber (16) has a second volume, the first volume and the second volume change at a change in position of the piston (18) relative to the cylinder barrel (32), and the combined first volume and second volume is constant at a change in the position of the piston.

4. The linear-displacement limiter (10) according to any of the claims 1 to 3, wherein the hydraulic cylinder (12) has a first intake (52) connected to the first chamber (14) and a second intake (54) connected to the second chamber (16), the hydraulic conduit (24) is connected to the first intake (52) and the second intake (54), the first intake (52) and the second intake (54) are located on the same side of the hydraulic cylinder (12), the hydraulic cylinder (12) further has a first filler port (56) connected to the first chamber (14) through which the hydraulic fluid can be introduced into the hydraulic cylinder (12) and a second filler port (58) connected to the second chamber (16) through which the hydraulic fluid can be introduced into the hydraulic cylinder (12), the first filler port (56) and the second filler port (58) are located on the same side of the hydraulic cylinder (12) and on the opposite side of the hydraulic cylinder (12) relative to the first intake (52) port and the second intake (54) port.

5. The linear-displacement limiter (10) according to claim 1, wherein the hydraulic cylinder (12) has a cylinder barrel (32) that forms a cylinder bore (36) that has a bore axis (38), the piston (18) is located in the cylinder bore (36) and can shift in position along the bore axis (38), the cylinder bore (36) has a cross-sectional cylinder area perpendicular to the bore axis (38) and an average cross-sectional cylinder area along the bore axis (38), the piston (18) has a first piston face that is exposed to the first chamber (14), the first piston face has an effective area projected on a plane perpendicular to the bore axis (38), and the effective area of the first piston face is smaller than 25%, or 35%, of the average cross-sectional cylinder area.

6. The linear-displacement limiter (10) according to claim 5, wherein the piston (18) has a second piston face that is exposed to the second chamber (16), the second piston face has an effective area projected on a plane perpendicular to the bore axis (38), and the effective areas of the first piston face and the second piston face are the same.

7. The linear-displacement limiter (10) according to claim 1, wherein the hydraulic cylinder (12) has a cylinder barrel (32) that forms a cylinder bore (36), the maximum volume of the hydraulic fluid in the first chamber (14) is smaller than 25%, or 35% of the volume of the cylinder bore (36).

8. The linear-displacement limiter (10) according to claim 1, wherein the hydraulic cylinder (12) has a cylinder barrel (32) with a first end and an opposite second end, the hydraulic cylinder has a first head (40) at the first end, the piston (18) has a first end position in which it is contacts the first head (40), the first head (40) forms a first socket (148), the piston (18) forms a first spigot (152), the first spigot (152) enters the first socket (148) and the first spigot (152) and the first socket (148) jointly forms a first orifice between them at a transition of the piston to the first end position, the first spigot (152) is arranged to generate a flow of hydraulic fluid through the first orifice at the transition to the first end position, and the first orifice is arranged to restrict the flow of hydraulic fluid.

9. The linear-displacement limiter (10) according to any of the claims 1 to 8, wherein the limiter (10) comprises a first safety valve (64) arranged to bypass the valve (28).

10. The linear-displacement limiter (10) according to claim 7, wherein the first safety valve (64) is a two-way safety valve.

11. The linear-displacement limiter (10) according to claim 7, wherein the first safety valve (64) is a one-way safety valve arranged to bypass the valve (28) in a fluid direction from the first chamber (14) to the second chamber (16).

12. The linear-displacement limiter (10) according to claim 11, wherein the limiter (10) further comprises a second safety valve (66), the second safety valve (66) is a one-way safety valve and arranged to bypass the valve (28) in a fluid direction from the second chamber (16) to the first chamber (14).

13. A stick-shifter arrangement (76) that comprises:
- a gear stick (78),
- a frame (80),
- a mechanical linkage (74), and
- a linear-displacement limiter (10) according to any of the claims 1 to 12, wherein,
the gear stick (78) is pivotally connected to the frame (80) and arranged to pivot around a first axis (86) relative to the frame (80),
the mechanical linkage (74) is arranged to translate a pivoting of the gear stick (78) around the first axis (86) to a linear displacement relative to the frame (80),
the first rod (20) of the hydraulic cylinder (12) of the linear-displacement limiter (10) is connected to the mechanical linkage (74), and
the linear-displacement limiter (10) is arranged to selectively limit the linear displacement.

14. A foot-pedal arrangement (68) that comprises:
- a foot pedal (70),
- a frame (80),
- a mechanical linkage (74), and
- a linear-displacement limiter (10) according to any of the claims 1 to 12, wherein,
the foot pedal (70) is pivotally connected to the frame (80) and arranged to pivot around a first axis (86) relative to the frame (80),
the mechanical linkage (74) is arranged to translate a pivoting of the foot pedal (70) around the first axis (86) to a linear displacement relative to the frame (80),
the first rod (20) of the hydraulic cylinder (12) of the linear-displacement limiter (10) may be connected to the mechanical linkage (74), and
the linear-displacement limiter (10) is arranged to selectively limit the linear displacement.

15. A drivetrain (128) that comprises:
an automatic transmission (124),
a transmission control unit (126),
a stick-shifter arrangement (76) according to claim 13, and
a foot-pedal arrangement (68) according to claim 14, wherein
the automatic transmission (124) has a plurality of gears,
the transmission control unit (126) is operationally connected to the automatic transmission (124) and arranged to control the operation of the automatic transmission (124),
the stick-shifter arrangement (76) and the foot-pedal arrangement (68) are operationally connected to the transmission control unit (126), and
the automatic transmission (124), transmission control unit (126), stick-shifter arrangement (76), and foot-pedal arrangement (68) are configured to operate the automatic transmission (124) to emulate a drivetrain that has a manual transmission and a clutch.
